# EUROPEAN PATENT SPECIFICATION

(11) **EP 1 591 635 B1**
(45) Date of publication and mention of the grant of the patent: **11.03.2009**
(21) Application number: 05008889.7
(22) Date of filing: 22.04.2005
(51) Int. Cl.: F01N 3/023, F01N 9/00, F01N 11/00

(54) **Regeneration control of diesel particulate filter**
Steuerungssystem für die Regenerierung eines Dieselpartikelfilters
Système de commande de régénération pour un filtre à particules diesel

(30) Priority: 22.04.2004 JP 2004127116; 22.04.2004 JP 2004127120
(43) Date of publication of application: 02.11.2005
(73) Proprietor: NISSAN MOTOR CO., LTD., Yokohama-shi Kanagawa-ken (JP)
(72) Inventor: Mizoguchi, Kentaro, Isehara-shi Kanagawa 259-1117 (JP); Kurozumi, Nobuo, Yokohama-shi Kanagawa 244-0804 (JP); Matsuda, Mitsuhiro, Naka-gun Kanagawa 259-0132 (JP); Saegusa, Yashiro, Isehara-shi Kanagawa 259-1115 (JP)
(74) Representative: Grünecker, Kinkeldey, Stockmair & Schwanhäusser Anwaltssozietät

(56) References cited:
- EP-A- 1 291 514
- US-A1- 2003 145 582
- PATENT ABSTRACTS OF JAPAN vol. 2003, no. 12, 5 December 2003 (2003-12-05) & JP 2003 314248 A (DENSO CORP), 6 November 2003 (2003-11-06)

## Description

This invention relates to a regeneration device of a filter which traps a particulate matter contained in an exhaust gas of a diesel engine according the preamble of independent claim 1 and a regeneration control method of a filter which traps a particulate matter contained in an exhaust gas of a diesel engine according the preamble of independent claim 6. Such a device and such a method can be taken from the prior art document JP2003-314248A.

A diesel particulate filter (DPF) which traps particulate matter such as carbon particles contained in the exhaust gas of a diesel engine must be subjected to so-called regeneration by burning the trapped particulate matter in order to be able to trap particulate matter anew.

A determination as to whether or not the DPF must be regenerated is performed on the basis of a differential pressure of the exhaust gas upstream and downstream of the DPF. If an error occurs when detecting the differential pressure, an error also occurs when determining the regeneration timing. To detect the differential pressure with a high degree of precision, the zero point of the differential pressure is preferably calibrated upon the establishment of a predetermined condition. Here, calibration of the zero point involves regarding the differential pressure detected under the predetermined condition as zero, and correcting the differential pressure detected thereafter on the basis of the detected value of the differential pressure at this time.

JP2002-206419A, published by the Japan Patent Office in 2002, proposes that the zero point of the differential pressure sensor be calibrated while the diesel engine is idling.

JP2003-314248A, published by the Japan Patent Office in 2003, proposes that the zero point of the differential pressure sensor be calibrated immediately before start-up or immediately after shutdown of the diesel engine.

As regards the former, while the diesel engine is operative, the differential pressure of the exhaust gas upstream and downstream of the DPF tends to be unstable due to the exhaust pulse or the degree to which the filter is blocked, and it is therefore difficult to calibrate the zero point with precision.

As regards the latter, even though the diesel engine is stopped, the zero point is calibrated under specific circumstances, i.e. immediately before start-up or immediately after shutdown, and hence a reference differential pressure used in the calibration must be sampled using a three-way valve.
It is an objective of the present invention to provide a regeneration device of a filter which traps a particulate matter contained in an exhaust gas of a diesel engine and a regeneration control method of a filter which traps a particulate matter contained in an exhaust gas of a diesel engine having a high precision of the calibration.
According to the present invention said objective is solved by a regeneration device of a filter which traps a particulate matter contained in an exhaust gas of a diesel engine having the features of independent claim 1. Preferred embodiments are laid down in the dependent claims.
Furthermore, said objective is also solved by a regeneration control method of a filter which traps a particulate matter contained in an exhaust gas of a diesel engine having the features of independent claim 6.

According to the present teaching a device and a method is provided which can calibrate the zero point of a differential pressure of exhaust gas upstream and downstream of a DPF accurately, and by means of a simple constitution.

Accordingly, it is provided a regeneration device of a filter which traps a particulate matter contained in an exhaust gas of a diesel engine. The regeneration device comprises a sensor means which detects a differential pressure between an exhaust gas pressure upstream of the filter and an exhaust gas pressure downstream of the filter, a regeneration control means which controls a regeneration of the filter according to the differential pressure, and a programmable calibration means.

The programmable calibration means is programmed to calibrate a detected value of the sensor means based on the detected value of the sensor means when the diesel engine is not operative and provide the regeneration control means with a calibrated value as the differential pressure, and to prevent the calibration of the output value of the sensor means from being performed and provide the regeneration control means with a non-calibrated value as the differential pressure unless a cooling water temperature when the diesel engine ceases to operate is satisfied.

It is also provided a regeneration control method of the filter. The method comprises detecting a differential pressure between an exhaust gas pressure upstream of the filter and an exhaust gas pressure downstream of the filter and controlling a regeneration of the filter according to the differential pressure. The method further comprises calibrating a detected differential pressure based on the detected differential pressure when the diesel engine is not operative and providing a calibrated value as the differential pressure for controlling the regeneration of the filter, while preventing a calibration of the detected differential pressure from being performed and providing a non-calibrated value as the differential pressure for controlling the regeneration of the filter unless a cooling water temperature when the diesel engine ceases to operate is satisfied.
Hereinafter, the present invention is illustrated and explained by means of preferred embodiments in conjunction with the accompanying drawings.

FIG. 1 is a schematic diagram of a regeneration device of a diesel particulate filter according to the present teaching.

FIG. 2 is a flowchart illustrating a zero point calibration routine, executed by a controller according to the present teaching.

FIG. 3 is a timing chart illustrating temporal variation in a differential pressure of exhaust gas upstream and downstream of the filter following shutdown of an engine, according to research performed by the inventors.

FIG. 4 is a diagram illustrating the characteristics of an error occurring during detection of the differential pressure caused by the external temperature, according to research performed by the inventors.

FIG. 5 is a flowchart illustrating a calibration routine according to a second embodiment according to the present teaching.

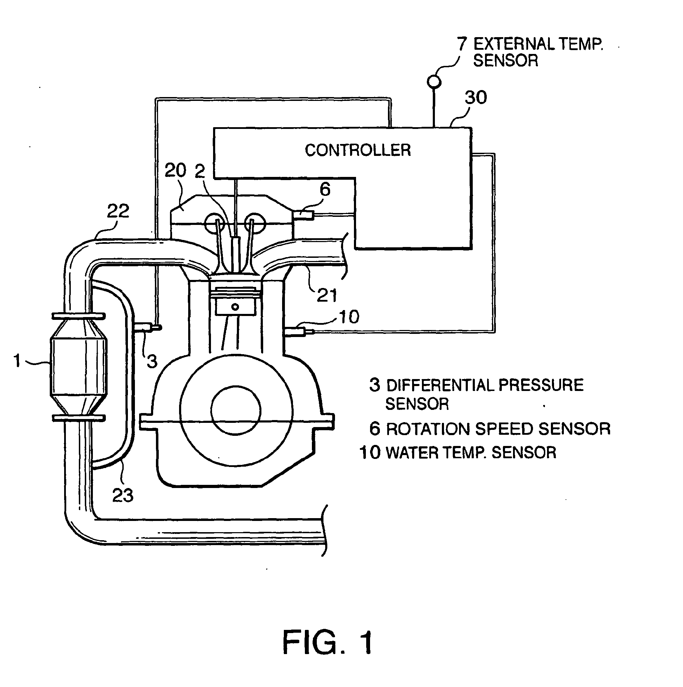

Referring to FIG. 1 of the drawings, a diesel engine 20 for a vehicle comprises an intake passage 21 and an exhaust passage 22.

A diesel particulate filter (DPF) 1 which traps particulate matter contained in the exhaust gas of the diesel engine 20 is disposed in the exhaust passage 22.

There is an upper limit to the amount of particulate matter that can be trapped by the DPF 1, and once the trapped amount has reached this upper limit, the DPF 1 must be regenerated. Regeneration is performed by burning the trapped particulate matter. Any known method, including fuel injection control of a fuel injector 2, may be applied as the method implemented by a regeneration device to burn the particulate matter.

The regeneration device comprises a controller 30 which determines whether or not regeneration is required, and performs regeneration control.

The controller 30 is constituted by a microcomputer comprising a central processing unit (CPU), read-only memory (ROM), random access memory (RAM), nonvolatile memory which stores a reference output value *Pout* of a differential pressure sensor 3 to be described below, and an input/output interface (I/O interface). The controller 30 may be constituted by a plurality of microcomputers.

The controller 30 determines whether the DPF 1 needs to be regenerated on the basis of a difference between the pressure in the exhaust passage 22 upstream of the DPF 1 and the pressure in the exhaust passage 22 downstream of the DPF 1. This is due to the fact that as the trapped particulate matter amount in the DPF 1 increases, the exhaust gas flow resistance in the DPF 1 increases, and hence the differential pressure upstream and downstream of the DPF 1 rises.

To detect the differential pressure upstream and downstream of the DPF 1, the regeneration device comprises a bypass passage 23 which bypasses the DPF 1, and the differential pressure sensor 3 which is disposed in the bypass passage 23. The differential pressure upstream and downstream of the DPF 1, detected by the differential pressure sensor 3, is input to the controller 30 via a signal circuit.

The controller 30 determines whether or not the DPF 1 needs to be regenerated on the basis of the differential pressure upstream and downstream of the DPF 1. When regeneration is required, the decision to implement regeneration, and the execution of regeneration, are performed in consideration of the operating conditions of the vehicle. Since the decision to implement regeneration and regeneration control are not the subject matter of the present teaching, and since a well-known method may be applied thereto, description thereof has been omitted.

The detection precision of the differential pressure detected by the differential pressure sensor 3 greatly affects the precision of the determination as to whether or not the DPF 1 needs to be regenerated. Therefore, the controller 30 performs calibration of the output value of the differential pressure sensor 3 upon the establishment of a predetermined calibration condition.

To calibrate the output value of the differential pressure sensor 3, the regeneration device further comprises a rotation speed sensor 6 which detects a rotation speed *Ne* of the engine, a water temperature sensor 10 which detects an engine cooling water temperature *Tw*, and an external temperature sensor 7 which detects an external temperature *Ta.* Detection data from these sensors are also input into the controller 30 as signals.

Calibration of the output value of the differential pressure sensor 3 by the controller 30 involves sampling the output value of the differential pressure sensor 3 under a predetermined condition in which the output value of the differential pressure sensor 3 ought to be zero, and correcting the subsequent output values of the differential pressure sensor 3 based on the difference between the sample value and zero.

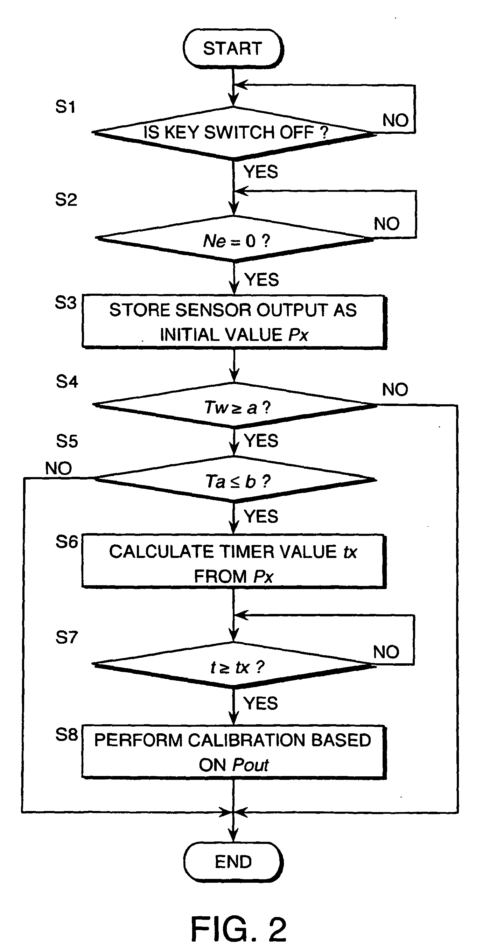

Next, referring to FIG. 2, a calibration routine of the differential pressure sensor 3, executed by the controller 30, will be described. This routine begins at the same time as a key switch of the engine is switched ON. It should be noted that the routine continues to be executed even when the key switch is OFF, and therefore setting is performed in advance to ensure that the operating power of the controller 30 is supplied independently of the key switch ON/OFF state.

First, in a step S1, the controller 30 determines whether or not the key switch is OFF.

When the determination is negative, or in other words when the diesel engine 20 is operative, the controller 30 waits for the determination to become affirmative while executing the determination at fixed intervals.

When the determination becomes affirmative, or in other words when the key switch is turned OFF, the controller 30 determines in a following step S2 whether or not the diesel engine 20 has ceased to operate. More specifically, the controller 30 determines whether or not the engine rotation speed *Ne* is zero.

When the determination is negative, the controller 30 continues to perform the determination at fixed intervals until the determination becomes affirmative.

When the determination of the step S2 becomes affirmative, the controller 30 reads an output value of the differential pressure sensor 3 in a step S3, and stores the output value in the memory (RAM) as an initial differential pressure *Px* immediately after shutdown of the diesel engine 20.

Next, in a step S4, the controller 30 determines whether or not the cooling water temperature *Tw* of the diesel engine 20 is not lower than a predetermined water temperature *a*. The predetermined water temperature *a* is equal to the water temperature when the determination as to whether or not the DPF 1 needs to be regenerated, is begun on the basis of the output value of the differential pressure sensor 3 during an operation of the diesel engine 20. Here, the predetermined water temperature a is set at 60 degrees Centigrade. Calibrating the output of the differential pressure sensor 3 under an identical water temperature condition to that under which regeneration of the DPF 1 is determined on the basis of the output value of the differential pressure sensor 3 is preferable for improving the calibration precision.

When the determination in the step S4 is negative, the controller 30 ends the routine without calibrating the output of the differential pressure sensor 3. In this case, the calibration routine is not executed until the key switch is turned ON again, and hence the next operation of the diesel engine 20 is performed without having achieved calibration of the output of the differential pressure sensor 3.

When the determination in the step S4 is affirmative, the controller 30 determines in a step S5 whether or not the external temperature *Ta* is no greater than a predetermined external temperature *b*.

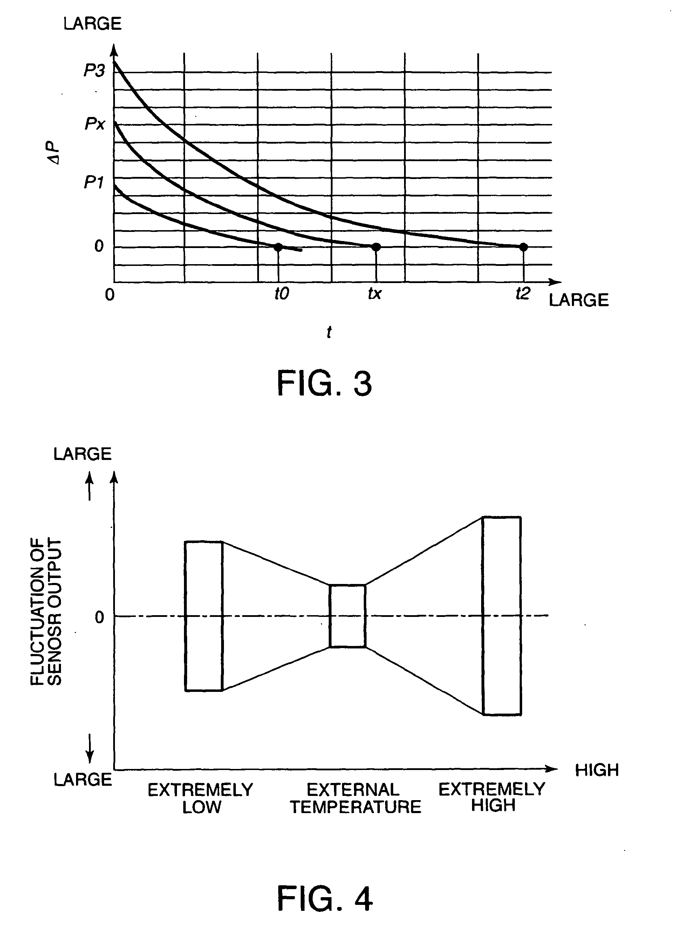

Referring to FIG. 4, variation in the output value of the differential pressure sensor 3 is great when the external temperature *Ta* is extremely high or extremely low. Therefore, extremely high temperatures and extremely low temperatures are not suitable for calibrating the output value of the differential pressure sensor 3. The step S5 is provided to ensure that calibration of the output of the differential pressure sensor 3 is not performed under such extreme external temperature conditions. Here, the predetermined external temperature *b* is set at 30 degrees Centigrade.

In this embodiment, only extremely high temperature conditions are excluded, and extremely low temperature conditions are not excluded. This is due to the fact that the cooling water temperature *Tw* of the diesel engine 20 has already been confirmed to be not lower than the predetermined water temperature *a*. Even when the external temperature is extremely low, the temperature of the differential pressure sensor 3 is unlikely to become extremely low as long as the water temperature *Tw* of the diesel engine 20 is high.

When the determination in the step S5 is negative, the controller 30 ends the routine without calibrating the output of the differential pressure sensor 3. In this case, the calibration routine is not executed until the key switch is turned ON again, and hence the next operation of the diesel engine 20 is performed without having achieved calibration of the output of the differential pressure sensor 3.

When the determination in the step S5 is affirmative, in a step S6 the controller 30 refers to a map stored in the memory (ROM) in advance to determine a timer value *tx* on the basis of the initial differential pressure *Px* immediately after shutdown of the diesel engine 20, which is stored in the memory.

Referring to FIG. 3, the ordinate of this diagram shows a differential pressure Δ*P* upstream and downstream of the DPF 1. The abscissa of the diagram shows an elapsed time *t* following shutdown of the diesel engine 20. The initial differential pressure *Px* stored in the memory corresponds to the differential pressure when the elapsed time *t* is zero. The curves in the diagram show temporal variation in the differential pressure Δ*P* corresponding to the initial differential pressure *Px*. For convenience of description, only three curves are illustrated in FIG. 3. A large number of combinations of the initial differential pressure *Px* and the required time *tx* for the differential pressure Δ*P* to reach zero, indicated by these curves, are set in advance on the map stored in the memory (ROM).

The controller 30 then sets the required time *tx*, obtained from the initial differential pressure *Px* stored in the memory by referring to this map, as the timer value.

By setting the timer value *tx* in accordance with the initial differential pressure *Px* in this manner, the point in time at which the actual differential pressure reaches zero can be estimated with a high degree of precision.

Next, in a step S7, the controller 30 determines whether or not the elapsed time *t* following shutdown of the diesel engine 20 has reached the timer value *tx.* The elapsed time *t* following shutdown of the diesel engine 20 is measured using the clock function of the microcomputer constituting the controller 30.

The controller 30 repeats the determination of the step S7 at fixed intervals until the elapsed time *t* reaches the timer value *tx.*

When the elapsed time *t* reaches the timer value *tx* in the step S7, the controller 30 executes calibration of the output value of the differential pressure sensor 3 in a step S8.

More specifically, the output value *Pout* of the differential pressure sensor 3 at this time is regarded anew as the zero point, and the subsequent output values of the differential pressure sensor 3 are corrected on the basis of the difference between the output value *Pout* and zero. For this purpose, the output value *Pout* is stored in the nonvolatile memory as a reference output value.

Following the processing of the step S8, the controller 30 ends the routine.

Regeneration of the DPF 1 is performed by having the controller 30 execute a DPF regeneration routine, which is different from the calibration routine, during an operation of the diesel engine 20. When an output value of the differential pressure sensor 3 is to be used in this routine, the output value of the differential pressure sensor 3 at that time is corrected on the basis of the reference output value stored in the nonvolatile memory, and then used.

By calibrating the output value of the differential pressure sensor 3 on the basis of the temperature condition and elapsed time following shutdown of the diesel engine 1 in this manner, the output value of the differential pressure sensor 3 can be calibrated with a high degree of precision. Moreover, no valves or other special instruments are required for the calibration. The determination in the step S5 and the determination in the step S7 correspond to the claimed first condition and the claimed second condition respectively.

In the embodiment described above, the output value of a single differential pressure sensor 3 is calibrated. However, the regeneration device may be constituted to detect the pressure in the exhaust passage 22 upstream of the DPF 1 and the pressure in the exhaust passage 22 downstream of the DPF 1 using individual pressure sensors, rather than the single differential pressure sensor 3, and to use the difference between these pressure values as the differential pressure Δ*P*.

The present teaching may also be applied to such a regeneration device. In this case, the reference differential pressure *Pout* is calculated in the step S7 assuming that the output values of the two pressure sensors match. In a subsequent operation of the regeneration device, the output value of the upstream side pressure sensor or the output value of the downstream side pressure sensor is corrected on the basis of the reference differential pressure *Pout.* Alternatively, the output values of both sensors may be corrected on the basis of the reference differential pressure *Pout* and a predetermined distribution factor.

In the embodiment described above, the calibration timing of the output value of the differential pressure sensor 3 is determined on the basis of the external temperature condition and the initial differential pressure *Px* at the point where the diesel engine 20 ceases to operate. Here, the external temperature condition is a parameter for determining the degree of variation in the output value of the differential pressure sensor 3, and the initial differential pressure *Px* is a parameter for determining the required time for the differential pressure to be substantially eradicated.

The regeneration device achieves a particularly favorable effect using both of these parameters together to determine the calibration timing, but it is not necessary to use both of the parameters together.

More specifically, the step S5 may be omitted from the calibration routine in FIG. 2 such that calibration is executed at a timing based on the initial differential pressure *Px* alone.

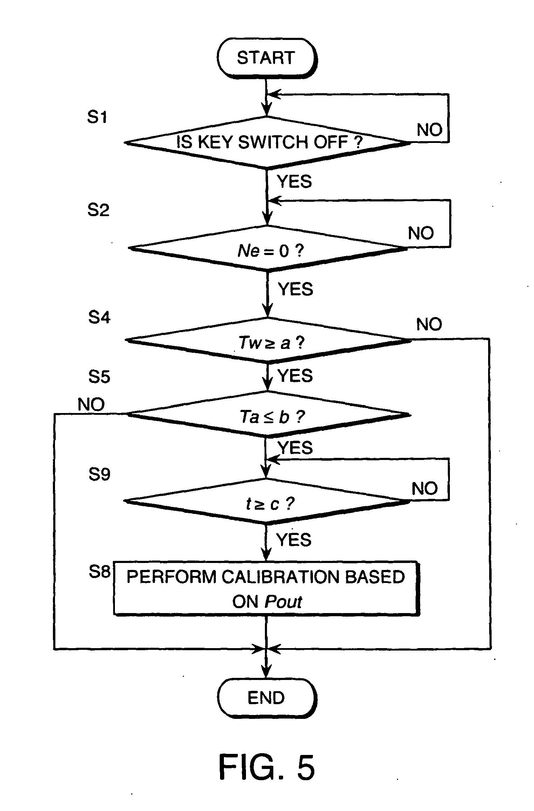

Alternatively, when the external temperature condition has been satisfied in the step S5 calibration of the output value of the differential pressure sensor 3 may be performed following the elapse of a fixed time period c. Referring to FIG. 5, a second embodiment of the present teaching, relating to the constitution of a calibration routine executed for this purpose, will now be described.

In this calibration routine, the step S3 is omitted from the calibration routine in FIG. 2, and a step S9 is provided in place of the steps S6 and S7. In this calibration routine, if the determination of the step S5 is affirmative, calibration of the output value of the differential pressure sensor 3 is executed in the step S8 following the elapse of the fixed time period c. The constitution of the other steps is identical to that of the routine in FIG. 2.

Even when the calibration timing is determined on the basis of only one of the temperature condition and the initial differential pressure *Px* in this manner, a commensurate degree of calibration precision is obtained in relation to the output value of the differential pressure sensor 3.

Further, in the calibration routine in FIG. 2, the engine cooling water temperature *Tw* is determined in the step S4 before the external temperature *Ta* is determined in the step S5.

As a result of this determination, calibration is performed in the same engine cooling water temperature region as the regeneration determination, as noted above, and hence a favorable degree of calibration precision is obtained. However, the step S4 is not an essential requirement of this invention, and may be omitted.

In each of the embodiments described above, the parameters required for control are detected using individual sensors, but the present teaching is not dependent on a method of obtaining parameters, and may be applied to any DPF regeneration device which executes the claimed calibration control using parameters.

## Claims

1. A regeneration device of a filter (1) which traps a particulate matter contained in an exhaust gas of a diesel engine (20), the regeneration device comprising:
a sensor means (3) which detects a differential pressure between an exhaust gas pressure upstream of the filter (1) and an exhaust gas pressure downstream of the filter (1);
a regeneration control means (2, 30) which controls a regeneration of the filter (1) according to the differential pressure; and
a programmable calibration means (30) programmed to:
calibrate a detected value of the sensor means (3) based on the detected value of the sensor means (3) when the diesel engine (20) is not operative and provide the regeneration control means (2, 30) with a calibrated value as the differential pressure;
**characterized in that**
the calibration means (30) is further programmed to:
prevent the calibration of the detected value of the sensor means (3) from being performed and provide the regeneration control means (2 30) with a non-calibrated value as the differential pressure unless a cooling water temperature of the diesel engine (20) when the engine (20) ceases to operate is not lower than a predetermined water temperature.

2. A regeneration device according to claim 1, **characterized in that** the calibration means (30) is further programmed to prevent the calibration of the detected value of the sensor means (3) from being performed and provide the regeneration control means (2, 30) with a non-calibrated value as the differential pressure unless an external temperature when the diesel engine (20) ceases to operate being not higher than a predetermined external temperature.

3. A regeneration device according to claim 2, **characterized in that** the calibration means (30) is further programmed to perform the calibration of the detected value of the sensor means (3) when a waiting period is elapsed after the diesel engine (20) ceases to operate, when the cooling water temperature of the diesel engine (20) when the engine (20) ceases to operate is not lower than a predetermined water temperature and the external temperature when the diesel engine (20) ceases to operate is higher than a predetermined external temperature.

4. A regeneration device according to claim 3, **characterized in that** the waiting period is set to lengthen as the differential pressure when the diesel engine (20) ceases to operate increases.

5. A regeneration device according to at least one of the claims 1 to 4, **characterized in that** the calibration means (30) is further programmed to perform the calibration such that the detected value of the sensor means (3) at a calibration timing equals zero.

6. A regeneration control method of a filter (1) which traps a particulate matter contained in an exhaust gas of a diesel engine (20), the method comprising:
detecting a differential pressure between an exhaust gas pressure upstream of the filter (1) and an exhaust gas pressure downstream of the filter (1);
controlling a regeneration of the filter (1) according to the differential pressure; and
calibrating a detected differential pressure based on the detected differential pressure when the diesel engine (20) is not operative and
providing a calibrated value as the differential pressure for controlling the regeneration of the filter (1);
**characterized in that**
the method further comprises preventing a calibration of the detected differential pressure from being performed and providing a non-calibrated value as the differential pressure for controlling the regeneration of the filter (1) unless a cooling water temperature of the diesel engine (20) when the engine (20) ceases to operate is not lower than a predetermined water temperature.

## Patentansprüche

1. Regenerierungsvorrichtung eines Filters (1), der ein Partikelmaterial, enthalten in einem Abgas eines Dieselmotors (20), auffängt, wobei die Regenerierungsvorrichtung aufweist:
eine Sensoreinrichtung (3), die eine Druckdifferenz zwischen einem Abgasdruck, stromauf des Filters (1), und einem Abgasdruck, stromab des Filters (1) erfasst; eine Regenerierungs- Steuereinrichtung (2, 30), die eine Regenerierung des Filters (1) entsprechend der Druckdifferenz steuert; und
eine programmierbare Kalibrierungseinrichtung (30), programmiert zum:
Kalibrieren eines erfassten Wertes der Sensoreinrichtung (3) auf der Grundlage des erfassten Wertes der Sensoreinrichtung (3), wenn der Dieselmotor (20) nicht im Betrieb ist und Versehen der Regenerierungs- Steuereinrichtung (2, 30) mit einem kalibrierten Wert als die Druckdifferenz;
**dadurch gekennzeichnet, dass**
die Kalibrierungseinrichtung (30) außerdem programmiert ist, um:
zu verhindern, dass eine Kalibrierung des erfassten Wertes der Sensoreinrichtung (3) ausgeführt wird, und die Regenerierungs- Steuereinrichtung (2, 30) mit einem nicht- kalibrierten Wert als die Druckdifferenz zu versehen, wenn nicht eine Kühlwassertemperatur des Dieselmotors (20), wenn der Motor (20) aufhört zu arbeiten, nicht niedriger als eine vorbestimmte Wassertemperatur ist.

2. Regenerierungsvorrichtung nach Anspruch 1, **dadurch gekennzeichnet, dass** die Kalibrierungseinrichtung (30) außerdem programmiert ist, zu verhindern, dass die Kalibrierung des erfassten Wertes der Sensoreinrichtung (3) ausgeführt wird, und die Regenerierungs- Steuereinrichtung (2, 30) mit einem nicht- kalibrierten Wert, als die Druckdifferenz versehen wird, wenn nicht eine Außentemperatur, wenn der Dieselmotor (20) aufhört zu arbeiten, nicht höher als eine vorbestimmte Außentemperatur ist.

3. Regenerierungsvorrichtung nach Anspruch 2, **dadurch gekennzeichnet, dass** die Kalibrierungseinrichtung (30) außerdem programmiert ist, die Kalibrierung des erfassten Wertes der Sensoreinrichtung (3) auszuführen, wenn eine Wartedauer vergangen ist, nachdem der Dieselmotor (20) aufgehört hat, zu arbeiten, wenn die Kühlwassertemperatur des Dieselmotors (20), wenn der Motor (20) aufhört zu arbeiten, nicht niedriger als eine vorbestimmte Wassertemperatur ist und die Außentemperatur, wenn der Dieselmotor (20) aufhört zu arbeiten, höher als eine vorbestimmte Außentemperatur ist.

4. Regenerierungsvorrichtung nach Anspruch 3, **dadurch gekennzeichnet, dass** die Wartedauer festgelegt wird, sich zu verlängern, wenn sich die Druckdifferenz, wenn der Dieselmotor (20) aufhört zu arbeiten, erhöht.

5. Regenerierungsvorrichtung nach zumindest einem der Ansprüche 1 bis 4, **dadurch gekennzeichnet, dass** die Kalibrierungseinrichtung (30) außerdem programmiert ist, die Kalibrierung derart auszuführen, dass der erfasste Wert der Sensoreinrichtung (3) zu einem Kalibrierungszeitpunkt Null ist.

6. Regenerierungs- Steuerungsverfahren eines Filters (1), der ein Partikelmaterial, enthalten in einem Abgas eines Dieselmotors (20), auffängt, wobei das Regenerierungsverfahren aufweist:
Erfassen einer Druckdifferenz zwischen dem Abgasdruck stromauf des Filters (1) und eines Abgasdruckes stromab des Filters (1);
Steuern einer Regeneration des Filters (1) entsprechend der Druckdifferenz; und
Kalibrieren einer erfassten Druckdifferenz auf der Grundlage der erfassten Druckdifferenz, wenn der Dieselmotor (20) nicht in Betrieb ist, und
Schaffen eines kalibrierten Wertes als die Druckdifferenz zum Steuern der Regenerierung des Filters (1);
**dadurch gekennzeichnet, dass**
das Verfahren außerdem aufweist Verhindern, dass die Kalibrierung der erfassten Druckdifferenz ausgeführt wird und Bereitstellen eines nicht- kalibrierten Wertes als die Druckdifferenz zum Steuern der Regenerierung des Filters (1), wenn nicht eine Kühlwassertemperatur des Dieselmotors (20), wenn der Motor (20) aufhört zu arbeiten, nicht niedriger als eine vorbestimmte Wassertemperatur ist.

## Revendications

1. Dispositif de régénération d'un filtre (1) qui piège une matière particulaire contenue dans un gaz d'échappement d'un moteur diesel (20), le dispositif de régénération comprenant :
un moyen formant capteur (3) qui détecte une pression différentielle entre une pression de gaz d'échappement en amont du filtre (1) et une pression de gaz d'échappement en aval du filtre (1) ;
un moyen de commande de régénération (2, 30) qui commande une régénération du filtre (1) en fonction de la pression différentielle ; et
un moyen d'étalonnage programmable (30), programmé pour :
étalonner une valeur détectée du moyen formant capteur (3) sur la base de la valeur détectée du moyen formant capteur (3) quand le moteur diesel (20) ne fonctionne pas et fournir au moyen de commande de régénération (2, 30) une valeur étalonnée en tant que la pression différentielle ;
**caractérisé en ce que**
le moyen d'étalonnage (30) est en outre programmé pour :
empêcher la réalisation de l'étalonnage de la valeur détectée du moyen formant capteur (3) et fournir au moyen de commande de régénération (2, 30) une valeur non étalonnée en tant que la pression différentielle sauf si une température d'eau de refroidissement du moteur diesel (20) quand le moteur (20) cesse de fonctionner n'est pas inférieure à une température prédéterminée de l'eau.

2. Dispositif de régénération selon la revendication 1, **caractérisé en ce que** le moyen d'étalonnage (30) est en outre programmé pour empêcher la réalisation de l'étalonnage de la valeur détectée du moyen formant capteur (3) et fournir au moyen de commande de régénération (2, 30) une valeur non étalonnée en tant que la pression différentielle, sauf si une température externe quand le moteur diesel (20) cesse de fonctionner n'est pas supérieure à une température externe prédéterminée.

3. Dispositif de régénération selon la revendication 2, **caractérisé en ce que** le moyen d'étalonnage (30) est en outre programmé pour effectuer l'étalonnage de la valeur détectée du moyen formant capteur (3) suite à une période d'attente après que le moteur diesel (20) a cessé de fonctionner, quand la température d'eau de refroidissement du moteur diesel (20) lorsque le moteur diesel (20) cesse de fonctionner n'est pas inférieure à une température prédéterminée de l'eau et quand la température externe lorsque le moteur diesel (20) cesse de fonctionner est supérieure à une température externe prédéterminée.

4. Dispositif de régénération selon la revendication 3, **caractérisé en ce que** la période d'attente est réglée de manière à s'allonger à mesure qu'augmente la pression différentielle lorsque le moteur diesel (20) cesse de fonctionner.

5. Dispositif de régénération selon au moins l'une des revendications 1 à 4, **caractérisé en ce que** le moyen d'étalonnage (30) est en outre programmé pour effectuer l'étalonnage de telle sorte que la valeur détectée du moyen formant capteur (3) à un moment d'étalonnage soit égale à zéro.

6. Procédé de commande de régénération d'un filtre (1) qui piège une matière particulaire contenue dans un gaz d'échappement d'un moteur diesel (20), le procédé comprenant les étapes consistant à :
détecter une pression différentielle entre une pression de gaz d'échappement en amont du filtre (1) et une pression de gaz d'échappement en aval du filtre (1) ;
commander une régénération du filtre (1) en fonction de la pression différentielle ; et
étalonner une pression différentielle détectée sur la base de la pression différentielle détectée quand le moteur diesel (20) ne fonctionne pas et fournir une valeur étalonnée en tant que la pression différentielle afin de commander la régénération du filtre (1) ;
**caractérisé en ce que**
le procédé comprend en outre l'étape consistant à empêcher la réalisation d'un étalonnage de la pression différentielle détectée et à fournir une valeur non étalonnée en tant que la pression différentielle afin de commander la régénération du filtre (1) sauf si une température d'eau de refroidissement du moteur diesel (20) quand le moteur (20) cesse de fonctionner n'est pas inférieure à une température prédéterminée de l'eau.
